# EUROPÄISCHE PATENTSCHRIFT

(11) **EP 2 760 667 B1**
(45) Veröffentlichungstag und Bekanntmachung des Hinweises auf die Patenterteilung: **09.03.2016**
(21) Anmeldenummer: 12778229.0
(22) Anmeldetag: 24.09.2012
(51) Int. Cl.: B32B 27/00, B32B 29/00, D21H 17/36, D21H 19/20, D21H 19/26, D21H 19/56, D21H 19/58, D21H 19/60, D21H 27/24, D21H 27/26, D21H 27/28, B32B 21/02, B32B 21/06, D21H 17/51, D21H 17/56, D21H 17/67, D21H 17/57

(54) **DECKSCHICHT MIT REDUZIERTEN ZUGEIGENSCHAFTEN ZUR VERWENDUNG VON ABRIEBFESTEM LAMINAT**
COVER LAYER WITH REDUCED TENSILE PROPERTIES FOR USE OF WEAR-RESISTANT LAMINATE
COUCHE DE RECOUVREMENT À PROPRIÉTÉS DE TRACTION RÉDUITES UTILISÉE POUR LA RÉALISATION D'UN STRATIFIÉ RÉSISTANT À L'ABRASION

(30) Priorität: 26.09.2011 DE 102011114404
(43) Veröffentlichungstag der Anmeldung: 06.08.2014
(73) Patentinhaber: DAKOR Melamin Imprägnierungen GmbH, 72535 Heroldstatt (DE)
(72) Erfinder: BECK, Elmar, 72535 Heroldstatt (DE); WENTZEL, Detlef Andreas, 89188 Merklingen (DE)
(74) Vertreter: Müller-Boré & Partner Patentanwälte PartG mbB
(86) Internationale Anmeldenummer: PCT/EP2012/003978
(87) Internationale Veröffentlichungsnummer: WO 2013/045067

(56) Entgegenhaltungen:
- EP-A1- 0 021 588
- EP-A1- 1 391 478
- EP-A1- 2 006 447
- DE-A1-102004 036 664
- DE-B- 1 219 211
- DE-B- 1 231 881

## Beschreibung

Die vorliegende Erfindung betrifft eine zugarme Deckschicht für ein Laminatmaterial, welche ein mit Harz imprägniertes, bedrucktes oder unbedrucktes Dekorpapier oder eine Kombination aus dem mit Harz imprägnierten Dekorpapier und einem mit Harz impägnierten Overlaypapier umfasst, wobei das Harz jeweils ein Gemisch aus mindestens einem Aminoplastharz und mindestens einem wasserlöslichen oder wasserdispergierbaren Kunststoff, wobei der mindestens eine wasserlösliche oder wasserdispergierbare Kunststoff Polyvinylalkohol ist und von 5 Gew.-% bis 10 Gew.-% des Harzes ausmacht, umfasst. Ferner betrifft die Erfindung die Verwendung der erfindungsgemäßen zugarmen Deckschicht zum Aufbau eines Laminatmaterials mit entsprechendem Gegenzug.

Es ist bekannt, Platten zur Herstellung von Laminatfussböden durch eine beidseitige Beschichtung von Holzwerkstoffplatten herzustellen. So gibt es zahlreiche Fussbodenbeläge, die aus einer Vielzahl von Schichten oder Platten bestehen, welche man durch Verkleben oder mechanisches Fügen miteinander verbindet. In vielen Fällen enthalten die Platten einen Kern aus Holz oder einem Holzwerkstoff, beispielsweise hochverdichtete Faserplatten der Art HDF (High Density Fiberboard) oder mitteldichte Faserplatten MDF (Medium Density Fiberboard). Dieser Kern wird auf seiner Oberseite mit einer Oberflächenbeschichtung, bestehend aus einem Dekorfilm, das heißt einer dekorativen Schicht, wie einem imprägnierten Dekorpapier, überzogen, so dass eine Fussbodenlaminatplatte eine dekorative Schicht aus einem bedruckten Papier umfassen kann, die auf dem Kern durch Imprägnierung mit einem polymerisierbaren Aminoplastharz, wie beispielsweise Melaminharz, aufgetragen ist. Bekanntermaßen wird in der Regel über der Dekorschicht als weiterer Bestandteil der Oberflächenbeschichtung auf gleiche Weise ein mit Aminoplastharz imprägniertes Overlay aufgebracht.

Auf der Unterseite kann eine bekannte Laminatbodenplatte eine Schicht umfassen, die insbesondere mechanische Spannungen im Schichtverbund ausgleichen soll. Diese Schicht kann eine Ausgleichsfolie sein, besteht aber zumeist aus einer einfachen Kraft- oder Regeneratpapierlage, die imprägniert und appliziert ist und daher als Gegenzugimprägnat bezeichnet wird.

DE 10 2004 036664 A1 beschreibt Deckschichten zum Aufbau eines Laminatmaterials. Hier wird jedoch Polyvinylalkohol allenfalls als Additiv offenbart, welches in seiner Bedeutung in einer Reihe mit Härtern, Netzmitteln bzw. Trennmitteln aufgeführt wird. Darüber hinaus wird zwingend die Verwendung von Cholin in der diesbezüglichen Kunststoffzusammensetzung zur Bildung einer solchen Deckschicht vorgesehen. GB 855 536 offenbart Aminoplastharzzusammensetzungen für die Verwendung in der Laminatherstellung mit einem Gewichtsanteil an Polyvinylalkohol von 5% bis 80%, bevorzugt 25% bis 30%.

Der vorliegenden Erfindung liegt die Aufgabe zugrunde, eine zugarme, d.h. mit reduzierten Zugeigenschaften, Deckschicht für ein Laminatmaterial bereitzustellen, die es ermöglicht, bei der Herstellung eines Laminatmaterials Papier und Harz im Gegenzugimprägnat, und damit verbunden auch die Kosten bei der Herstellung des Laminatmaterials, einzusparen, ohne dabei jedoch die Produkteigenschaften des Laminatmaterials zu verändern.

Diese Aufgabe wird durch die in den Ansprüchen gekennzeichneten Ausführungsformen der vorliegenden Erfindung gelöst.

Insbesondere wird erfindungsgemäß eine zugarme Deckschicht für ein Laminatmaterial bereitgestellt, die ein mit Harz imprägniertes bedrucktes oder unbedrucktes Dekorpapier oder eine Kombination aus dem mit Harz imprägnierten Dekorpapier und einem mit Harz imprägnierten Overlaypapier umfasst, wobei das Harz jeweils ein Gemisch aus mindestens einem Aminoplastharz und mindestens einem wasserlöslichen oder wasserdispergierbaren Kunststoff, wobei der mindestens eine wasserlösliche oder wasserdispergierbare Kunststoff Polyvinylalkohol ist und von 5 Gew.-% bis 10 Gew.-% des Harzes ausmacht, umfasst.

Der Begriff Aminoplastharz unterliegt erfindungsgemäß keiner Einschränkung. So können beispielsweise Melaminharze oder Harnstoffharze oder auch Gemische davon verwendet werden. Gemäß einer bevorzugten Ausführungsform der vorliegenden Erfindung ist das Aminoplastharz ein Gemisch aus Melaminharz und Harnstoffharz.

In einer bevorzugten Ausführungsform macht der mindestens eine wasserlösliche oder wasserdispergierbare Kunststoff mindestens 5 Gew.-% des Harzes aus.

Erfindungsgemäß ermöglicht die Verwendung des wasserlöslichen oder wasserdispergierbaren Kunststoffs räumlich das Aminoplastharz im imprägnierten Dekorpapier oder Overlaypapier zu ersetzen und somit die Anzahl der einzelnen Kondensationspunkte zu reduzieren. Dadurch kann bei der Herstellung eines Laminatmaterials, das die erfindungsgemäße zugarme Deckschicht umfasst, ein auf dem Träger des Laminatmaterials rückseitig angeordnetes Gegenzugimprägnat im Gewicht deutlich reduziert werden.

Das bedruckte oder unbedruckte Dekorpapier bzw. Dekofilm und das Overlaypapier unterliegen erfindungsgemäß keiner Einschränkung, solange sie sich branchenüblicherweise imprägnieren lassen. Das bedruckte oder unbedruckte Dekorpapier besteht vorzugsweise aus Zellulose, gegebenenfalls mit einem Anteil an Regenerat. Insbesondere ist der Begriff bedrucktes oder unbedrucktes Dekorpapier hinsichtlich seiner möglichen Grammatur weit auszulegen. Gemäß einer bevorzugten Ausführungsform der vorliegenden Erfindung beträgt das Flächengewicht des bedruckten oder unbedruckten Dekorpapiers von 30 bis 90 g/m². Die Art der Bedruckung des bedruckten Dekorpapiers unterliegt erfindungsgemäß keinerlei Einschränkung. Demzufolge kann die Bedruckung beispielsweise durch Kupfertiefdruck oder Digitaldruck erfolgen. Üblicherweise enthält ein bedrucktes Dekorpapier 1 bis 10 g/m² Farbe, die vorzugsweise in ein bis vier Stufen aufgetragen wird.

Das Imprägnieren des bedruckten oder unbedruckten Dekorpapiers kann mit allen branchenüblichen Maschinensystemen zum Aufbringen von Bindemitteln durchgeführt werden. Die Menge des Harzes kann beispielsweise mittels Dosierwalzen geregelt werden. Gemäß einer bevorzugten Ausführungsform wird die Menge des Harzes in der Art geregelt, dass die prozentuale Beharzung bezogen auf die Rohmasse des bedruckten oder unbedruckten Dekorpapiers 30 bis 150 % entspricht. Demzufolge beträgt beispielsweise das Endgewicht des Dekorpapiers nach Imprägnierung 90 bis 175 g/m², wenn ein bedrucktes oder unbedrucktes Dekorpapier mit einem Flächengewicht von 70 g/m² verwendet wird. Bei Verwendung von Polyvinylalkohol tritt bei der Imprägnierung ein Schmiereffekt ein, der es erlaubt, den Spaltabstand der Dosierwalzen deutlich zu verkleinern, wodurch es möglich wird, die Auftragungsmenge des Harzes vorteilhaft zu reduzieren.

Gemäß einer weiteren Ausführungsform der vorliegenden Erfindung kann die zugarme Deckschicht auch auch aus einem bedruckten oder unbedruckten Dekorpapier, wie vorstehend beschrieben, mit einem darauf aufgebrachten imprägnierten Overlaypapier. Das Overlaypapier besteht üblicherweise aus Edelzellstoff (α-Cellulose), wobei das Flächengewicht des Overlaypapiers vorzugsweise von 10 bis 70 g/m² beträgt. Das Endgewicht des imprägnierten Overlays beträgt vorzugsweise nach Imprägnierung 40 bis 300 g/m². Das Endgewicht der zugarmen Deckschicht, die sowohl einen Dekorfilm als auch ein Overlay umfasst, beträgt 70 bis 350 g/m², vorzugsweise 100 bis 300 g/m².

Die Dicke der zugarmen Deckschicht unterliegt erfindungsgemäß keiner Einschränkung. Gemäß einer bevorzugten Ausführungsform weist die zugarme Deckschicht eine Dicke von 30 bis 250 µm auf.

Gemäß einer weiteren bevorzugten Ausführungsform der vorliegenden Erfindung umfasst die zugarme Deckschicht, wenn aus einem bedruckten oder unbedruckten Dekorpapier oder einem imprägnierten Overlaypapier in Kombination mit dem Druckpapier aufgebaut, wie vorstehend beschrieben, weiter harte mineralische Partikel, wie zum Beispiel Korund, Siliciumoxid und/oder Siliciumcarbid. Durch Verwendung dieser Füllstoffe kann unter anderem die Deckschicht vor Abnutzung und Beschädigung geschützt werden.

Die erfindungsgemäße Deckschicht bzw. deren Beschichtungsmasse kann zusätzlich noch weitere Additive, wie zum Beispiel Härter, Trennmittel oder Netzmittel umfassen.

Geeignet zur Herstellung der erfindungsgemäßen zugarmen Deckschicht sind branchenübliche Imprägnieranlagen, wie sie üblicherweise zur Herstellung von imprägnierten Dekorpapieren und imprägnierten Overlaypapieren verwendet werden. Die erfindungsgemäße zugarme Deckschicht wird dabei auf die übliche Restfeuchte von 4 % bis 8 % getrocknet.

Des Weiteren wird in der vorliegenden Erfindung die Verwendung der erfindungsgemäßen zugarmen Deckschicht zum Aufbau eines Laminatmaterials, das einen Träger als Basiskörper aufweist, bereitgestellt, wobei die erfindungsgemäße Deckschicht auf der Oberseite des Trägers und ein Gegenzugimprägnat auf der Unterseite des Trägers angeordnet werden. Optional kann zwischen der Deckschicht und dem Träger ein Underlay vorgesehen werden. Solche Underlays sind im Stand der Technik bekannt. Üblicherweise sind solche Underlays auf Basis von mit Phenolharzen oder Melaminharzen imprägnierten Papieren oder Glasfaserbahnen.

Gemäß einer bevorzugten Ausführungsform ist der Träger eine MDF- oder HDF-Platte. Das Gegenzugimprägnat umfasst vorzugsweise ein imprägniertes Papier, dem sogenannten Gegenzugpapier, auf das eine schalldämmende Materialschicht mittels einer Klebebeschichtung aufgebracht sein kann. Das Gegenzugpapier besteht vorzugsweise aus einem Regeneratpapier auf der Basis von Edelzellstoffen, wobei eine Rohpapiergrammatur von 30 bis 140 g/m² zweckmäßig ist. Das Endgewicht nach der Tränkung mit z.B. Melamin-Harz beträgt vorzugsweise 100 bis 280 g/m². Gemäß der vorliegenden Erfindung kann ein üblicherweise eingesetztes Gegenzugpapier mit einem Flächengewicht von 105 g/m² und einem Endgewicht als Imprägnat von 250 g/m² durch ein Gegenzugpapier mit einem Flächengewicht von 50 g/m² und einem Endgewicht als Imprägnat von 150 g/m² ersetzt werden. Somit kann vorteilhafterweise eine Einsparung von etwa 40% der Masse des Gegenzugs realisiert werden. Bei dem Harz handelt es sich um ein Aminoplastharz, bestehend aus Harnstoff und/oder Melaminharzen. Der Gegenzug ist auf der Unterseite des Trägers angeordnet, damit das Laminatmaterial nach dem Aushärten in der Presse und für spätere Anwendung seine plane Form beibehält.

Durch Verwendung des spezifisch gewählten Harzgemisches kann vorteilhafterweise eine zugarme Deckschicht für ein Laminatmaterial bereitgestellt werden. Somit kann der Gegenzug leichter (dünner) ausgestaltet und die Harzmenge im Gegenzugimprägnat reduziert werden, da die erfindungsgemäße Deckschicht weniger Zugwirkung auf der Oberseite bei der Aushärtung aufweist. Dies führt sowohl zu einer Einsparung in den Fertigungskosten als auch zu einer umweltbewussten Reduzierung des im Gegenzugimprägnat verwendeten Formaldehyds. Die erfindungsgemäße zugarme Deckschicht entspricht allen geforderten Qualitätsmerkmalen, wie beispielsweise Abriebbeständigkeit, Haftung zur Platte, Oberflächengeschlossenheit und hohe Transparenz.

## Patentansprüche

1. Zugarme Deckschicht für ein Laminatmaterial, umfassend ein mit Harz imprägniertes, bedrucktes oder unbedrucktes Dekorpapier oder eine Kombination aus dem mit Harz imprägnierten Dekorpapier und einem mit Harz imprägnierten Overlaypapier, wobei das Harz jeweils ein Gemisch aus mindestens einem Aminoplastharz und mindestens einem wasserlöslichen oder wasserdispergierbaren Kunststoff umfasst,
wobei der mindestens eine wasserlösliche oder wasserdispergierbare Kunststoff Polyvinylalkohol ist und von 5 Gew.-% bis 10 Gew.-% des Harzes ausmacht.

2. Zugarme Deckschicht nach Anspruch 1, wobei das Aminoplastharz ein Gemisch aus Melaminharz und Harnstoffharz ist.

3. Zugarme Deckschicht nach Anspruch 1 oder 2, wobei das Flächengewicht des bedruckten oder unbedruckten Dekorpapiers von 30 bis 90 g/m² beträgt.

4. Zugarme Deckschicht nach einem der Ansprüche 1 bis 3, wobei das bedruckte Dekorpapier 1 bis 10 g/m² Farbe enthält.

5. Zugarme Deckschicht nach einem der Ansprüche 1 bis 4, wobei die Deckschicht eine Dicke von 30 bis 250 µm aufweist.

6. Zugarme Deckschicht nach einem der Ansprüche 1 bis 5, wobei die prozentuale Beharzung bezogen auf die Rohmasse des bedruckten oder unbedruckten Dekorpapiers von 30 bis 150 % beträgt.

7. Zugarme Deckschicht nach einem der Ansprüche 1 bis 6, welche weiter harte mineralische Partikel umfasst.

8. Zugarme Deckschicht nach einem der Ansprüch 1 bis 7, wobei das Flächengewicht des Overlaypapiers von 10 bis 70 g/m² beträgt

9. Verwendung der zugarmen Deckschicht nach einem der Ansprüche 1 bis 8 zum Aufbau eines Laminatmaterials, das einen Träger als Basiskörper aufweist, wobei die zugarme Deckschicht auf der Oberseite des Trägers und ein Gegenzugimprägnat auf der Unterseite des Trägers angeordnet werden.

10. Verwendung nach Anspruch 9, wobei der Träger eine MDF- oder HDF-Platte ist.

11. Verwendung nach Anspruch 9 oder 10, wobei das Gegenzugimprägnat ein Gegenzugpapier, auf das eine schalldämmende Materialschicht mittels einer Klebebeschichtung aufgebracht ist, umfasst.

12. Verwendung nach Anspruch 11, wobei das Gegenzugpapier aus einem Regeneratpapier auf der Basis von Edelzellstoffen besteht und eine Rohpapiergrammatur von 30 bis 140 g/m² aufweist.

13. Verwendung nach Anspruch 12, wobei das Endgewicht des Gegenzugpapiers nach Tränkung mit einem Harz 100 bis 250 g/m² beträgt.

## Claims

1. A low-tension cover layer for a laminate material, comprising a resin-impregnated, printed or unprinted decorative paper or comprising a resin-impregnated overlay paper or comprising a combination of the two, where the resin in each case comprises a mixture of at least one aminoplastic resin and at least one water-soluble or water-dispersible synthetic polymer,
where the at least one water-soluble or water-dispersible synthetic polymer is polyvinyl alcohol and constitutes 5% by weight to 10 % by weight of the resin.

2. The low-tension cover layer as claimed in claim 1, where the aminoplastic resin is a mixture of melamine resin and urea resin.

3. The low-tension cover layer as claimed in claim 1 or 2, where the weight per unit area of the printed or unprinted decorative paper is from 30 to 90 g/m².

4. The low-tension cover layer as claimed in any of claims 1 to 3, where the printed decorative paper comprises from 1 to 10 g/m² of ink.

5. The low-tension cover layer as claimed in any of claims 1 to 4, where the thickness of the cover layer is from 30 to 250 µm.

6. The low-tension cover layer as claimed in any of claims 1 to 5, where the percentage resinification, based on the mass of the printed or unprinted decorative paper prior to impregnation, is from 30 to 150%.

7. The low-tension cover layer as claimed in any of claims 1 to 6, which further comprises hard mineral particles.

8. The low-tension cover layer as claimed in any of claims 1 to 7, where the weight per unit area of the overlay paper is from 10 to 70 g/m².

9. The use of the low-tension cover layer as claimed in any of claims 1 to 8 for the construction of a laminate material which has a carrier as base, where the low-tension cover layer is arranged on the upper side of the carrier and an impregnated balancing material is arranged on the underside of the carrier.

10. The use as claimed in claim 9, where the carrier is a sheet of MDF or of HDF.

11. The use as claimed in claim 9 or 10, where the impregnated balancing material is a balancing paper onto which a layer of sound-deadening material has been applied by means of an adhesive coating.

12. The use as claimed in claim 11, where the balancing paper is composed of a recycled paper based on superior chemical pulps and has a grammage, prior to impregnation, of from 30 to 140 g/m².

13. The use as claimed in claim 12, where the final weight of the balancing paper after saturation with a resin is from 100 to 250 g/m².

## Revendications

1. Couche de recouvrement à faibles propriétés de traction destinée à un produit stratifié, comportant un papier de décoration imprimé ou non imprimé, imprégné de résine ou le papier de décoration imprégné de résine combiné avec un papier de sur-revêtement imprégné de résine, la résine comportant chaque fois un mélange d'au moins une résine aminoplaste avec au moins une matière synthétique soluble ou dispersable dans l'eau,
ladite matière synthétique soluble ou dispersable dans l'eau étant un alcool de polyvinyle en une quantité allant de 5 à 10 % en poids de la résine.

2. Couche de recouvrement à faibles propriétés de traction selon la revendication 1, dans laquelle la résine d'aminoplaste consiste en un mélange de résine de mélamine et d'une résine d'urée.

3. Couche de recouvrement à faibles propriétés de traction selon la revendication 1 ou 2, dans laquelle le grammage du papier de décoration imprimé ou non imprimé est de 30 à 90 g/m².

4. Couche de recouvrement à faibles propriétés de traction selon l'une des revendications 1 à 3, dans laquelle le papier de décoration imprimé contient 1 à 10 g/m² de matière colorante.

5. Couche de recouvrement à faibles propriétés de traction selon l'une des revendications 1 à 4, présentant une épaisseur de 30 à 250 µm.

6. Couche de recouvrement à faibles propriétés de traction selon l'une des revendications 1 à 5, dans laquelle le pourcentage d'enduction de résine, par rapport à la masse brute du papier de décoration imprimé ou non imprimé est de 30 à 150 %.

7. Couche de recouvrement à faibles propriétés de traction selon l'une des revendications 1 à 6, comportant, par ailleurs, des particules minérales dures.

8. Couche de recouvrement à faibles propriétés de traction selon l'une des revendications 1 à 7, dans laquelle le grammage du papier de sur-revêtement est de 10 à 70 g/m².

9. Utilisation de la couche de recouvrement à faibles propriétés de traction selon l'une des revendications 1 à 8, pour l'assemblage d'un produit stratifié qui comporte un support servant de corps de base, la couche de recouvrement à faibles propriétés de traction étant agencée sur la face supérieure du support et une couche imprégnée de contretraction étant agencée sur la face inférieure du support.

10. Utilisation selon la revendication 9 dans laquelle le support consiste en une plaque de MDF ou de HDF.

11. Utilisation selon la revendication 9 ou 10, dans laquelle la couche imprégnée de contretraction comporte un papier de contretraction sur lequel une couche de matière d'isolation phonique est appliquée moyennant un enduit adhésif.

12. Utilisation selon la revendication 11 dans laquelle le papier de contretraction consiste en un papier de recyclage à base de cellulose à haute teneur en alpha-cellulose et présente un grammage de papier brut de 30 à 140 g/m².

13. Utilisation selon la revendication 12 dans laquelle le poids final du papier de contretraction est de 100 à 250 g/m² après imprégnation avec la résine.
